# EUROPÄISCHE PATENTSCHRIFT

(11) **EP 1 547 405 B1**
(45) Veröffentlichungstag und Bekanntmachung des Hinweises auf die Patenterteilung: **13.12.2006**
(21) Anmeldenummer: 03735313.3
(22) Anmeldetag: 20.05.2003
(51) Int. Cl.: H04Q 7/22, H04M 11/00, G08C 17/02

(54) **FERNSTEUERUNG EINER FAHRZEUGFUNKTION ÜBER EIN MOBILFUNKNETZ**
REMOTE CONTROL OF A VEHICLE FUNCTION VIA A MOBILE RADIO NETWORK
TELECOMMANDE D'UNE FONCTION D'UN VEHICULE PAR L'INTERMEDIAIRE D'UN RESEAU DE COMMUNICATION MOBILE

(30) Priorität: 10.06.2002 DE 10225787
(43) Veröffentlichungstag der Anmeldung: 29.06.2005
(73) Patentinhaber: ROBERT BOSCH GMBH, 70442 Stuttgart (DE)
(72) Erfinder: SONNENREIN, Thomas, 31167 Bockenem (DE); LAEDKE, Michael, 31134 Hildesheim (DE); BAUER, Norbert, 97616 Bad Neustadt (DE)
(86) Internationale Anmeldenummer: PCT/DE2003/001623
(87) Internationale Veröffentlichungsnummer: WO 2003/105504

(56) Entgegenhaltungen:
- DE-A- 10 018 373
- DE-A- 10 044 528
- US-A- 6 148 212
- US-A1- 2002 045 442

## Beschreibung

### Stand der Technik

Die Erfindung betrifft ein Verfahren und Vorrichtung zur Übertragung, zum Senden und/oder zum Empfang von Informationen in Verbindung mit einem Fahrzeug zum Steuern einer Funktion, insbesondere zur Fernbedienung bzw. Fernsteuerung von Komponenten und/oder Funktionen im Fahrzeug.

Die DE 100 26 754 A1 beschreibt ein Verfahren und Vorrichtung zur Übertragung, zum Senden und/oder zum Empfang von Informationen in Verbindung mit einem Fahrzeug zur Ferndiagnose, Fernsteuerung von Komponenten des Fahrzeugs, oder ähnlichem, wobei über ein bestehendes Telekommunikationsnetz und/oder Datennetz von einem Benutzer eines Kraftfahrzeugs mittels Übertragung geeigneter Signale Informationen zur Ferndiagnose oder zur Fernsteuerung von Fahrzeugfunktionen wie beispielsweise Sitzheizung, Standheizung, etc. übertragen werden. Diese Signale werden dabei durch ein im Kraftfahrzeug angebrachtes mobiles oder fest eingebautes Telekommunikationsendgerät empfangen und über eine Schnittstelle einer Verarbeitungseinheit zugeführt. Eine konkrete Realisierung, insbesondere unter Berücksichtigung des Aufwandes im Fahrzeug und/oder der Sicherheit der übertragenen Informationen, ist jedoch nicht beschrieben.

Die DE 100 18 373 A zeigt eine Vorgehensweise zur Fernbedienung von Geräten, wobei über ein Mobilfunknetz von einem Mobilfunkgerät eine SMS-Nachricht an eine im Fahrzeug angeordnete Steuereinrichtung übertragen wird. In dieser Steuereinheit wird dann die eingegangene SMS-Nachricht mit den dort gespeicherten Nachrichten verglichen und je nach Übereinstimmung der eingegangenen Nachrichten mit gespeicherten Nachrichten ein bestimmter Steuerausgang zur Durchführung eines Steuerbefehls eingeschaltet. Mit anderen Worten wird die über das Mobilfunknetz empfangene Information in der Steuereinheit des Fahrzeugs ausgewertet, wobei die Steuereinrichtung mehrere separate Steuerausgänge vorgesehen hat, die zur Ansteuerung der an die Steuerausgänge angeschlossener Geräte dienen.

Gemäß der US-A 6 148 212 erfolgt die Steuerung durch Anrufen einer im Fahrzeug befindlichen Mobilfunkeinheit durch den Benutzer.

### Vorteile der Erfindung

Durch die Verwendung bestehender Kommunikationskanäle wie Mobilfunknetze und/oder Internet sowie bestehender Nachrichtenformate des Mobilfunknetzes zur

Informationsübertragung beispielsweise zur Fernsteuerung oder Fernbedienung von Komponenten und/oder Funktionen in einem Fahrzeug ist es ermöglicht, von einem handelsüblichen Mobiltelefon aus oder von einem ans Internet angeschlossenen, herkömmlichen Computer (PC) direkt in das Fahrzeug einzugreifen, z.B. wenigstens eine Komponente fernzusteuern. Besonders vorteilhaft ist, dass sowohl als Sender handelsübliche Mobilfunkeinheiten oder Computer als auch als Empfänger im Fahrzeug handelsübliche Mobilfunkeinheiten oder Telematikeinheiten im Fahrzeug verwendet werden können.

Deshalb sind bei Fahrzeugen, die bereits mit einer Mobilfunkeinheit ausgerüstet sind, keine zusätzlichen Sender- bzw. Empfängerkomponenten erforderlich. Dadurch werden Kosten für den Benutzer des Kraftfahrzeugs vermieden. Ferner wird die Benutzung der Fernbedienung/Fernsteuerung komfortabler gestaltet, da der Nutzer den mobilen Sender (z.B. ein Handy oder ein PDA mit Mobilfunkfunktionalität oder ein PC) sowohl zu den herkömmlichen Tätigkeiten auch zum Fernbedienen verwenden kann. Separate Geräte sind damit überflüssig.

Besonders vorteilhaft ist der Einsatz eines mehrstufigen Sicherheitskonzepts, welches unerlaubte Zugriffe verhindert.

Weitere Vorteile ergeben sich aus der nachfolgenden Beschreibung von Ausführungsbeispielen bzw. aus den abhängigen Patentansprüchen.

### Zeichnung

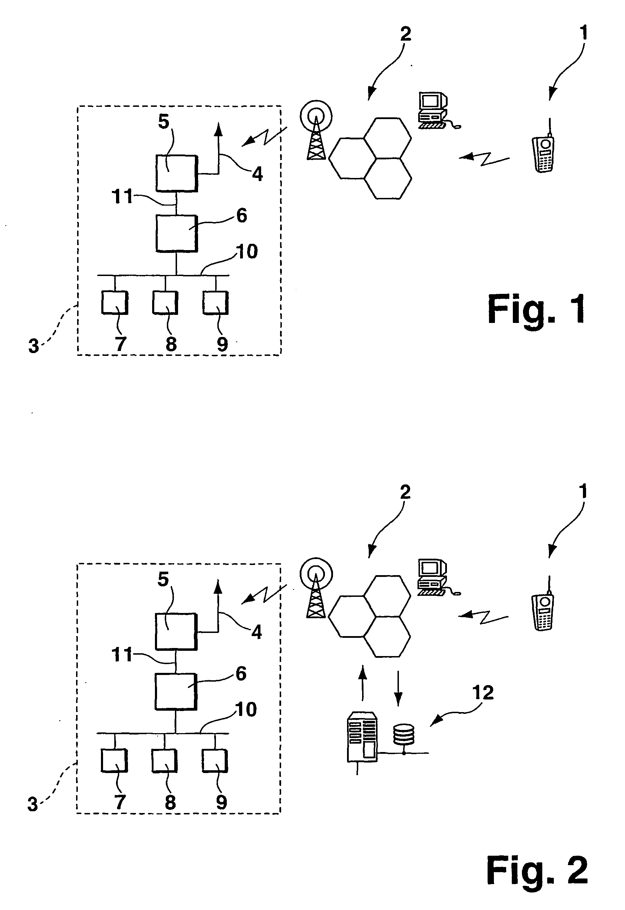

Die Erfindung wird nachstehend anhand der in der Zeichnung dargestellten Ausführungsformen näher erläutert. Die Figuren 1 bis 4 zeigen vier Ausführungen der Informationsübermittlung am Beispiel der Fernsteuerung wenigstens einer Komponente eines Fahrzeugs über bestehende Kommunikationskanäle.

### Beschreibung von Ausführungsbeispielen

Figur 1 zeigt ein erstes Ausführungsbeispiel für eine Fernsteuerung einer Komponente oder einer Funktion in einem Fahrzeug direkt über das Mobilfunknetz von einem Mobilfunktelefon (Handy) einer Bedienperson, z.B. des Besitzers des Fahrzeugs, Fahrzeughalters aus. Gezeigt ist in Figur 1 das Mobilfunkgerät 1, welches über eine standardisierte Luftschnittstelle (z.B. GSM) Nachrichten in ein Mobilfunknetz 2 sendet. Das Mobilfunknetz 2 sendet die Nachricht an einen Mobilfunkempfänger 5, welcher in einem Kraftfahrzeug fest oder reversibel angeordnet ist. Dieser MobiIfunkempfänger 5 ist mit einer Antenne 4 zum Empfang der übermittelten Nachrichten verbunden. Es ist ferner über eine Datenleitung 11 mit einer Verarbeitungseinheit 6 verknüpft. Letztere ist beispielsweise über ein Bussystem 10 mit wenigstens einer Komponente (7, 8, 9) des Kraftfahrzeugs 3 verbunden. Beispiele für solche Komponenten sind Zentralverriegelungen der Türen, Standheizung, Motorvorheizung, Heckscheibenheizung, Außenspiegelbeheizung, Schiebedach, Alarmanlage, Parkleuchte/Standlicht, elektrisch betätigbare Verdecke, Telematikeinheiten für Diagnose- oder Wartungszwecke, Motorsteuereinheiten, etc. Die Verarbeitungseinheit 6 ist dabei je nach Ausführung Teil der Mobilfunkeinheit 5 oder eine von dieser über eine vorbestimmte Schnittstelle verbundene, getrennte Einheit.

Um auf Funktionen im Kraftfahrzeug, z.B. auf wenigstens eine Komponente des Fahrzeugs, zugreifen und diese steuern zu können, gibt eine Bedienperson in sein Mobilfunkgerät 1 eine Information (Nachricht, z.B. ein Code) ein, die für eine bestimmte Aktion im Fahrzeug vorbestimmt ist. Mit Hilfe einer Telefonnummer wird die Mobilfunkeinheit 12 des Kraftfahrzeugs über das Mobilfunknetz 2 angerufen. In der Mobilfunkeinheit oder in einer daran angeschlossenen Verarbeitungseinheit 6 des Kraftfahrzeugs wird in einem bevorzugten Ausführungsbeispiel mittels Sicherheitsmechanismen die Telefonnummer des Absenders der Information (Nachricht) mit einer zuvor gespeicherten Nummer verglichen und die Berechtigung des Anrufenden zur Funktionssteuerung überprüft. Je nach Ausführung sind in der Mobilfunkeinheit 5 bzw. der Verarbeitungseinheit 6 des Fahrzeugs eine oder mehrere Telefonnummern gespeichert, so dass im letzten Fall unterschiedlichen Nutzern die Fernsteuerungsfunktionalität offen steht. Die eingegebene Information wird zur Mobilfunkeinheit 5 und zur Verarbeitungseinheit 6 übermittelt. Die Information wird nur ausgewertet, wenn sich bei der Überprüfung des Anrufes die Berechtigung des Anrufers ergibt.

Oben sowie im Folgenden werden Mobilfunkeinheit 5 und Verarbeitungseinheit 6 als getrennte Einheiten beschrieben. In anderen Ausführungen jedoch ist die Verarbeitungseinheit 6 in die Mobilfunkeinheit 5 integriert (ein Gehäuse) oder sogar mit der Mobilfunkeinheit identisch, wobei die Verarbeitungseinheit in diesem Fall ein Programm oder Programme darstellt, die im Mikrocomputer der Mobilfunkeinheit implementiert sind.

Im bevorzugten Ausführungsbeispiel wird die Information als Kurznachricht (SMS) in dem entsprechenden Datenformat übermittelt. Der Bediener des Mobiltelefons 1 gibt daher einen vorbestimmten Code als SMS ein und sendet diese im Rahmen der herkömmlichen SMS-Funktionalität an den Empfänger (Mobilfunkgerät im Kraftfahrzeug). In einem bevorzugten Ausführungsbeispiel hat es sich geeignet erwiesen, jeder auszuführenden Aktion einen bestimmten Zahlencode zuzuordnen. Beispielsweise wird der Aktion "Zentralverriegelung öffnen" der Code 0001, der Aktion "Standheizung ein" der Code 0002, der Aktion "Standheizung aus" der Code 0003, etc, zugeordnet. Die Übermittlung dieses Codes per SMS reicht dann (bei Berechtigung) aus, die Aktion einzuleiten. Hierbei kann vorgesehen sein, dass der Nutzer anstatt den vorgegebenen eigene Code vergeben und per Programmierung der Verarbeitungseinheit 6 die Steuerungen über diese individuellen Codes vornehmen kann. In anderen Ausführungen wird auch Klartext als Nachricht zum Auslösen der Aktion verwendet.

Die Übermittlung dieses Code geschieht wie oben erwähnt mittels Kurznachricht, insbesondere mittels SMS. Aufbau und Verwendung einer SMS sind z.B. in den Spezifikationen
**TS/SMG-040340QR2 (European digital telecommunication system; Technical realization of the Short Message Service Point-to-Point) und**
**TS/SMG-030411QR (European digital telecommunication system; Point-to-Point Short Message Service support on mobile radio interface) beschrieben.**

Das empfangende Mobilfunkgerät gibt die erhaltene Nachricht an die Verarbeitungseinheit 6 ab, die neben der oben dargestellten Sicherheitsüberprüfung bei positivem Ergebnis dieser Sicherheitsprüfung den Code entschlüsselt, beispielsweise mittels einer Tabelle, und ein ermitteltes, für die gewünschte Aktion vorgegebenes Steuerdatum (im gewünschten Busformat, bei CAN mit vorgegebenem Identifier) über den Datenbus 10 einer Steuereinheit der jeweiligen Komponente mitteilt. Diese führt dann die gewünschte Aktion aus. Im vorgenannten Beispiel der Standheizung wird also von der Verarbeitungseinheit 6 ein Signal auf den Datenbus 10 gegeben, welches in der Steuereinheit der Standheizung entsprechend der empfangenen Nachricht ein Ein- oder Ausschalten der Standheizung bewirkt.

In einer anderen Ausführung ist der übermittelte Code mit dem Steuerdatum identisch, so dass die Verarbeitungseinheit nur noch die Aufgabe hat, diesen Code weiterzusenden, wobei in der Regel eine Anpassung an das im Fahrzeug verwendete Bussystem (z.B. CAN Auswahl des Identifiers) notwendig ist.

Eine alternative oder zusätzliche Möglichkeit eines Sicherheitsmechanismus stellt die Verwendung eines Codeworts dar. Die gesendete Nachricht enthält dabei ein Codewort, z.B. eine Identifikationsnummer und/oder ein Passwort, welches der Verarbeitungseinheit 6 zuvor bekannt gemacht wurde, beispielsweise durch Einstellung der Verarbeitungseinheit durch den Fahrzeugnutzer oder durch Voreinstellung ab Werk. Die Verarbeitungseinheit untersucht dann die ankommende Nachricht, indem das Codewort mit den vorgespeicherten Einstellungen verglichen wird. Nachrichten mit fehlender oder falscher Identifikation und/oder mit fehlendem oder falschem Passwort werden verworfen. Auch hier ist je nach Ausführungsbeispiel die Verwendung einer oder mehrerer Identifikationsnummern und/oder eines oder mehrerer Passwörter für verschiedene Nutzer mit ggf. verschiedenen Berechtigungen möglich.

Eine weitere alternative oder zusätzliche Sicherheitsmaßnahme ist das Verschlüsseln der Nachricht selbst. In diesem Fall wird die Nachricht mit einem Schlüssel, der der Verarbeitungseinheit bekannt ist, verschlüsselt. Nur korrekt verschlüsselte Nachrichten werden von der Verarbeitungseinheit weiterverarbeitet.

Je nach Anwendungsbeispiel wird eine der oben genannten Sicherheitsmaßnahmen oder eine beliebige Kombination der geschilderten Sicherheitsmaßnahmen verwendet.

Im Ausführungsbeispiel der Figur 1 sendet also der Nutzer eine Kurznachricht (SMS) direkt ins Fahrzeug, um eine Aktion auszulösen. Möchte der Nutzer beispielsweise die Heckscheibenheizung in seinem Fahrzeug aktivieren, sendet er von seinem Mobiltelefon oder von seinem PDA-Gerät mit Mobilfunkfunktion eine SMS an die Mobilfunknummer der Verarbeitungseinheit im Fahrzeug, z.B. eines Autoradios mit GSM-Schnittstelle und entsprechender Zusatzfunktionalität. Die SMS enthält das Kommando "Heckscheibenheizung einschalten" sowie gegebenenfalls ein Passwort und/oder eine Identifikationsnummer, die in der Verarbeitungseinheit des Fahrzeugs bekannt sind/ist. Ferner oder alternativ ist der Verarbeitungseinheit die Absendernummer, von denen die Kurznachricht gesendet wird, bekannt. Ergibt die Überprüfung in der Verarbeitungseinheit, dass je nach Ausgestaltung Passwort bzw. Absendernummer der Kurznachricht korrekt sind, so wird die Kurznachricht insgesamt als gültig betrachtet und wie oben dargestellt die entsprechende Aktion im Fahrzeug ausgelöst (Heckscheibenheizung wird eingeschaltet).

Im bevorzugten Ausführungsbeispiel wird eine Bestätigung der erfolgten Aktion ebenfalls per Kurznachricht an das Mobiltelefon 1 des Nutzers zurückgesendet. Eine entsprechende Rückmeldung über Kurznachricht an den Absender des Steuerbefehls erfolgt auch im Fehlerfall, wenn entweder die Aktion im Fahrzeug nicht ausgeführt werden konnte, das Passwort oder die Absendernummer nicht gültig oder ein anderer Fehler vorliegt. Das angesprochene Steuergerät sendet in diesem Fall das Bestätigungsdatum über das Bussystem zur Verarbeitungseinheit, die dieses Datum z.B. in Klartext umsetzt und als SMS zum Nutzer absetzt. Bei nicht bestandener Sicherheitsprüfung wird ein vorbestimmter Text als SMS zurückgesendet. Diese Rückmeldung ist optionaler Bestandteil. Es ist durchaus vorstellbar, ein System ohne Rückmeldung, mit Ausnahme des Fehlerfalls, aufzubauen. Dadurch werden Kommunikationskosten gespart.

In Figur 2 ist ein zweites Ausführungsbeispiel dargestellt, bei welchem die vom Nutzer über sein Mobiltelefon abgesendete Nachricht zunächst an einen Diensteanbieter (12), dort an einen Zentralrechner gesendet wird. Dieser Diensteanbieter, der zum Empfang von Kurznachrichten im Mobilfunknetz 2 eingebunden ist, bzw. die dort vorgesehene Rechnereinheit, übernimmt in einer bevorzugten Ausführungsform das wie oben beschriebene Decodieren der Kurznachricht sowie ggf. die Sicherheitsüberprüfung des Anrufers und die Nachricht an das Fahrzeug weiter. Dort wird dann die empfangene Nachricht entsprechend der oben dargestellten Weise ausgewertet und weitergeleitet, wobei in einer Ausführung eine erneute Sicherheitsprüfung (Anrufer ist der Diensteanbieter bzw. der Zentralrechner) und ggf. ein erneutes Dekodieren der Nachricht stattfindet. Je nach Ausführungsbeispiel übernimmt der Diensteanbieter weitere Aufgaben, wie beispielsweise die Authentifizierung des Nutzers, das Festlegen von Zugriffsrechten für bestimmte Benutzergruppen, etc. In einem Ausführungsbeispiel stellt der Diensteanbieter ein Call-Center dar, welches Telefonaufträge zur Fernsteuerung im Fahrzeug annimmt.

Die oben geschilderten Sicherheitsmaßnahmen werden dabei einzeln und in beliebiger Kombination je nach Ausführungsbeispiel entweder nur beim Diensteanbieter (Serviceprovider), nur in der Verarbeitungseinheit im Fahrzeug oder an beiden Stellen durchgeführt.

Im Beispiel der Figur 2 sendet der Nutzer wie im Beispiel der Figur 1 eine Kurznachricht (SMS) über Mobilfunk an einen Serviceprovider bzw. dessen Zentralrechner 12, der dann wiederum eine neue Kurznachricht an das Fahrzeug über das Mobilfunknetz sendet, um die gewünschte Aktion im Fahrzeug auszulösen. Möchte der Nutzer z.B. aus dem Mobilfunknetz die Standheizung in seinem Fahrzeug aktivieren, sendet er von seinem Mobiltelefon eine SMS an die Mobilfunknummer des Serviceproviders. Die Kurznachricht (SM) enthält das Kommando "Standheizung einschalten", gegebenenfalls einen Usernamen und/oder ein Passwort oder ähnliches, die vom Serviceprovider, dort in einer Datenbank des Zentralrechners, zusammen mit weiteren Informationen wie Art des Fahrzeugs, Mobilfunkrufnummer der Nachrichtenverarbeitungseinheit im Fahrzeug, persönliche Daten, etc. abgespeichert sind. Weiterhin wird die Absendernummer des Nutzers gemeldet, mit der er berechtigt ist, die für ein entsprechendes Fahrzeug bestimmte Aktion durch eine gültige Kurznachricht (SM) beim Serviceprovider auszulösen. Anhand von Usernamen und/oder Passwort ermittelt der Zentralrechner 12 auf seiner Datenbank die Mobilfunknummer und eventuell die Art des Fahrzeugs. Wird Username und Passwort als richtig erkannt, so wird, die Gültigkeit der Kurznachricht (SM) vorausgesetzt, vom Zentralrechner 12 eine oder mehrere Kurznachrichten (SM) an das Fahrzeug geschickt, um die gewünschte Aktion, hier die Standheizung zu aktivieren, auszuführen. In der Verarbeitungseinheit des Fahrzeugs wird die vom Serviceprovider ankommende Kurznachricht wie anhand Figur 1 dargestellt verarbeitet.

Auf dem Server kann nach dem erfolgreichen Empfang einer SMS zum Auslösen einer Aktion z. B. eine eigene Applikation gestartet werden, die über ein an den Server-Rechner angeschlossenes Mobilfunkgerät direkt eine SMS von beliebiger Gestalt (ganz nach der jeweiligen Implementierung) verschickt.
Alternativ könnte einem speziellen SMS-Serverprogramm auf dem gleichen oder auf einem mit dem Diensteserver-Rechner verbundenen (z. B. über Internet) Rechner das Kommando zum Versenden einer SMS gegeben werden.

Zwischen Serviceprovider (Zentralrechner 12) und Fahrzeug wird in einem Ausführungsbeispiel ein spezielles Protokoll innerhalb der Kurznachrichten verwendet, z.B. ACP (Application Communication Protocol von Motorola). Ferner werden zusätzliche Informationen, die in der Datenbank des Serviceproviders vorliegen (z.B.

Kommandocodes, die von der Verarbeitungseinheit zur Auslösung der Aktion im Fahrzeug direkt auf den Fahrzeugbus übertragbar sind), in das verwendete Protokoll eingebettet.
Auf diese Weise erfolgt eine Vereinfachung des in der Fahrzeug-Nachrichtenverarbeitungseinheit vorzuhaltenden Systems. Unter spezieller Art von Kurznachricht (SM) wird verstanden, dass ein spezieller, dem Nutzer des Fahrzeugs nicht bekannter Aufbau des Inhaltes der SMS vorgesehen ist.
In einer Ausführung werden vom Server mehrere SMS verschickt, wenn dies nötig ist, um die im Vergleich zur ersten beschriebenen Variante (direkte SMS an das Fahrzeug) höhere Datenmenge per SMS zu übertragen.
Zur weitergehenden Sicherung der Übertragung kann in derNachricht (SM) vom Provider an das Fahrzeug ein geheimer Codes gesendet werden, der bereits zuvor in der Verarbeitungseinheit im Fahrzeug einprogrammiert war. Dieser geheime Code wird in der Verarbeitungseinheit überprüft. Entsprechend der Darstellung zur Figur 1 wird zusätzlich in einem Ausführungsbeispiel die Absendertelefonnummer des Serviceproviders auf Gültigkeit geprüft mit einer in der Verarbeitungseinheit gespeicherten Telefonnummer. Die Aktion wird nur dann gestartet, wenn die Überprüfung positiv ausfällt. Auch eine Verschlüsselung ist hier wieder möglich.

In einer anderen vorteilhaften Ausführungsform wird folgende Reihenfolge eingesetzt:
1) Überprüfen der Absendertelefonnummer
2) Überpüfen des "keys" (geheimer Code)
3) Verschlüsseln des keys bzw. der Nutzdaten zur weiteren Erhöhung der Sicherheit

Sobald die Aktion (hier Standheizung einschalten) verarbeitet ist, schickt das Fahrzeug eine Rückmeldung über den Erfolg oder den Nichterfolg der Ausführung ebenfalls per Kurznachricht an die Servicezentrale (Serviceprovider). Wie oben beschrieben, sollte dieser Vorgang aus Kostengrüden optional sein. Diese kann entweder auf die Rückmeldung reagieren, indem sie beispielsweise im Fehlerfalle die Nachricht erneut sendet, eine Nachricht mit einem anderen Code sendet (wenn für diese Aktion mehrere Codes vorhanden sind), oder die Nachricht, gegebenenfalls aufbereitet, an den Nutzer weiterleitet. Möglich sind auch Rückmeldungen an den Nutzer über E-Mail, die Benachrichtigung von mehreren, beim Serviceprovider registrierten Mobilfunknummern und/oder Benachrichtigungen über mehrere Kanäle wie beispielsweise E-Mail, SMS, Fax oder Ähnliches.

Der geschilderte, beim Serviceprovider ablaufende Vorgang läuft im Zentralrechner mittels entsprechender Softwareprogramme vollständig automatisch ab.

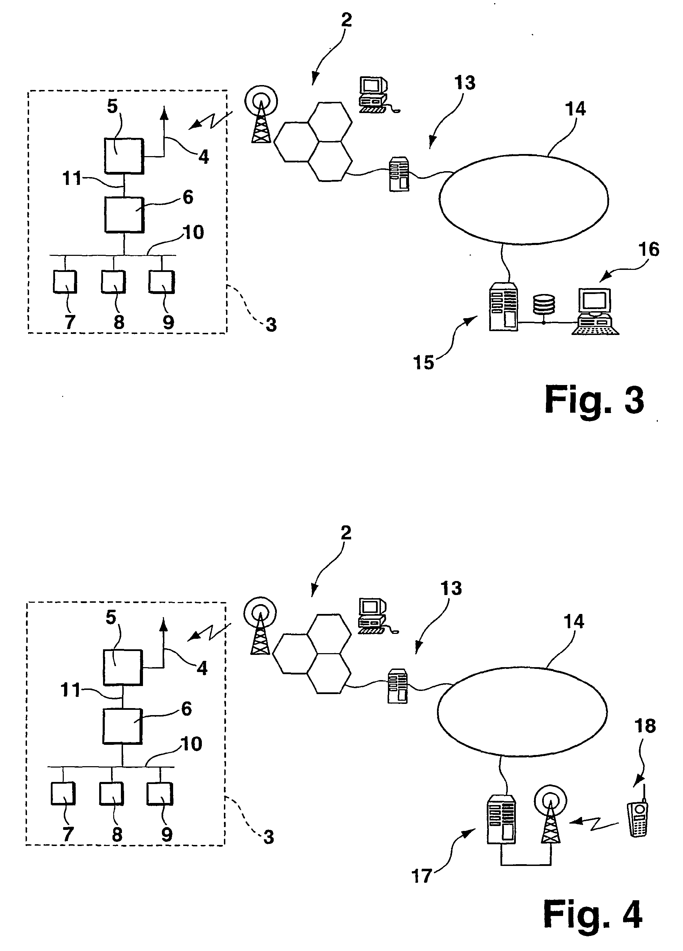

Ein weiteres Ausführungsbeispiel ist in Figur 3 dargestellt. Figur 3 zeigt eine Lösung, nach der der Nutzer über eine Internetseite von einem Server die entsprechenden Nachrichten über das mit diesem Server verbundene Mobilfunknetz zur Aktivierung bzw. Deaktivierung wenigstens einer Komponente und/oder Funktion des Fahrzeugs an das Kraftfahrzeug sendet. Auch hier kann, wie anhand der Figur 2 beschrieben, der Diensteprovider bzw. der aufgesuchte Webserver weitere Aufgaben wie beispielsweise die Authentifizierung des Nutzers oder das Festlegen von Zugriffsrechten für bestimmte Benutzergruppen wie oben dargelegt, übernehmen.

In dem in Figur 3 gezeigten Ausführungsbeispiel ist ein Computer 16 (PC) über eine Datenleitung mit einem Server 15 eines Internetproviders verbunden. Der Server 15 ist über das Internet 14 mit einem Webserver 13 verbunden, der über eine Mobilfunkschnittstelle oder eine andere Verbindung zum Mobilfunknetz 21 verfügt.

Im geschilderten Ausführungsbeispiel verwendet der Nutzer also anstelle seines Mobiltelefons einen internetfähigen PC, um von den Web-Seiten eines Serviceproviders aus eine Aktion im Fahrzeug auszulösen. Als Beispiel sei das Einschalten des Standlichtes des Fahrzeugs geschildert. Dazu geht der Nutzer mit seinem PC über seinen Browser ins Internet und sucht die Seiten seines Serviceproviders auf. Aus Sicherheitsgründen sind diese Seiten mit Hilfe bekannter Maßnahmen (z.B. SSL) gesichert. Die Eingaben und die Kommunikation zwischen PC und Serviceprovider werden bevorzugt verschlüsselt übertragen. Beim Server des Serviceproviders loggt sich der Nutzer mit Usernamen und Passwort ein, die er vom Serviceprovider erhalten hat, nachdem er sich dort registriert hat und dem Serviceprovider alle relevanten Informationen für dessen Datenbank zugeleitet hat (Mobilfunknummer seiner Verarbeitungseinheit im Fahrzeug, gegebenenfalls persönliche Daten, Fahrzeugtyp, etc.). Nach erfolgreicher Authentifizierung wird dem Nutzer daraufhin vom Serviceprovider ein Menü angezeigt, beispielsweise im HTML-Format, auf dem alle Funktionen, die im Fahrzeug ausgelöst werden können, aufgelistet sind und angeklickt werden können. Die Auswahl der angezeigten Funktionen erfolgt dabei nach Maßgabe der Angaben des Nutzers und des Fahrzeugtyps durch Auswahl aus einer Datenbank. Der Nutzer wählt dann z.B. die Funktion "Standlicht einschalten" durch anklicken aus und lässt diese ausführen. Vom Serviceprovider bzw. dem Internetserver werden daraufhin eine oder mehrere Nachrichten (SMS) an das Fahrzeug geschickt, um die Standheizung zu aktivieren. Entsprechend der Darstellung zur Figur 1 bzw. 2 wird die Nachricht in der Verarbeitungseinheit 6 im Fahrzeug entsprechend ausgewertet. Für die Übertragung zwischen Webserver und Fahrzeug über das Mobilfunknetz 2 wird wie anhand der Figur 2 dargestellt entweder eine spezielle Art der SMS und/oder ein spezielles SMS-Protokoll verwendet (z.B. ACP) und/oder zusätzliche Informationen an die Verarbeitungseinheit geschickt, die in der Datenbank des Serviceproviders vorliegen. Derartige zusätzliche Informationen sind beispielsweise Kommandocodes, die von der Verarbeitungseinheit zur Auslösung der Aktion im Fahrzeug nur noch direkt auf den Fahrzeugbus übertragen werden müssen. Dies führt zu einer erheblichen Vereinfachung des Systems im Fahrzeug.

Bei dem Server handelt es sich um einen Standard-Webserver mit einem angebundenem "intelligenten" Modul (z. B. ein Skriptspracheninterpreter). Ein einfaches Realisierungsbeispiel für eine Fernwirkung über Internet wäre folgendermaßen: Zunächst wird die Authentifizierung abgeschlossen wie oben beschrieben. Dem Benutzer wird daraufhin ein Formular angezeigt, das alle Möglichkeiten, die dieser Benutzer mit dem auf ihn registrierten Fahrzeug (evtl. auch Fahrzeugen) hat, zurückgegeben. Dieses wurde von dem Skriptspracheninterpreter generiert aus den Daten, die in der Datenbank des Serviceproviders vorliegen und vom Webserver an den Browser des Nutzers ausgeliefert. Der Nutzer wählt im Formular eine oder meherere Option(en) aus und schickt das es ab. Daraufhin wird wieder eine besondere Art von Seite auf dem Server aufgerufen, die den Aufruf des Skriptspracheninterpreters mit den vom Nutzer eingegebenen Informationen als Parameter / Eingangsdaten nach sich zieht. Diese werden nun im Skriptspracheninterpreter verarbeitet.
Dabei kann dieser z. B eine externe Applikation auf dem Server starten, die über ein angeschlossenes Mobilfunkgerät direkt eine SMS von beliebiger Gestalt (ganz nach der jeweiligen Implementierung) verschickt.
Alternativ könnte einem speziellen SMS-Server auf dem gleichen oder auf einem mit dem Webserver-Rechner verbundenen (z. B. über Internet) Rechner vom Skriptspracheninterpreter das Kommando zum Versenden einer SMS gegeben werden.

Bezüglich der notwendigen Sicherheitsmaßnahmen ist hier zu unterscheiden zwischen der Kommunikation vom Computer zum betreffenden Webserver und der Kommunikation zwischen Webserver und Fahrzeug. Bezüglich der Kommunikation zwischen Computer und Webserver werden die für das Internet bekannten und standardisierten Sicherheitsmechanismen und Verschlüsselungsverfahren wie z.B. SSL und HTTPS verwendet. Bezüglich der Kommunikation zwischen Webserver und Fahrzeug über das Mobilfunknetz werden die anhand Figur 1 dargestellten Sicherheitsmaßnahmen einzeln oder in beliebiger Kombination realisiert.

Ebenso ist vorgesehen, in einem Ausführungsbeispiel, dass die Nachricht, die vom Provider an das Fahrzeug übertragen wird, beispielsweise einen geheimen Code enthält, der in der Verarbeitungseinheit einprogrammiert ist. Zusätzlich wird auch hier in der Verarbeitungseinheit die Absendertelefonnummer des Providers auf Gültigkeit überprüft, indem eingespeicherte Telefonnummern auf Übereinstimmung geprüft werden.

Sobald die Aktion im Fahrzeug verarbeitet ist, sendet das Fahrzeug eine Rückmeldung über Erfolg oder Nichterfolg der Ausführung per SMS an die Servicezentrale. Diese wird je nach Ausführungsbeispiel entweder auf die Rückmeldung eigenständig reagieren, z.B. durch Senden eines anderen Kommandocodes im Fehlerfall, oder die Nachricht verarbeiten und in Form einer HTML-Seite auf dem Browser des Nutzers darstellen. Dies geschieht kurze Zeit später, nachdem der Nutzer dem Ausführen-Knopf betätigt, hat.

Wie anhand Figur 2 bereits erwähnt wird der geschilderte Vorgang im Server des Serviceproviders vollständig automatisiert ablaufen.

In Figur 4 ist eine weitere Variante der Lösung nach Figur 3 dargestellt. Danach ruft der Nutzer über sein Mobiltelefon 18 eine WAP-Seite auf. Der die Seite zur Verfügung stellende Provider 17 übernimmt dann die Sendung der Nachricht entsprechend der Darstellung in Figur 3. Voraussetzung ist somit, dass der Nutzer über ein WAP-fähiges Mobiltelefon oder Endgerät verfügt, um von den WAP-Seiten eines Serviceproviders eine Aktion im Fahrzeug auszulösen. Der Unterschied zur Darstellung anhand Figur 3 liegt darin, dass statt eines PCs mit Web-Browser ein Mobilfunkendgerät mit WAP-Browser verwendet wird und dementsprechend statt HTML-Seiten und SSL-Sicherheitsmechanismen, WAP-Seiten und die Sicherheitsmechanismen der WAP-Technologie benutzt werden. Letzteres gilt für die Kommunikation zwischen dem mobilen Endgerät und dem betreffenden Webserver. Bezüglich der Kommunikation zwischen Webserver und Fahrzeug wird auf die Darstellung zu einer der Figuren Figur 1 bis 3 verwiesen.

## Patentansprüche

1. Verfahren zum Empfang von Informationen in Verbindung mit einem Fahrzeug zum Steuern einer Funktion, wobei von einer Verarbeitungseinheit (5, 6) im Fahrzeug über ein Mobilfunknetz (2) eine Information empfangen wird, mit deren Hilfe die Funktion im Fahrzeug gesteuert wird, wobei die Information eine Kurznachricht ist, **dadurch gekennzeichnet, dass** die Kurznachricht derart aufgebaut ist, dass Kommandocodes enthalten sind, die von der Verarbeitungseinheit (5, 6) zur Auslösung der Aktion im Fahrzeug nur noch direkt auf den, die Verarbeitungseinheit (6) mit Steuereinheiten (7, 8, 9) im Fahrzeug verbindenden Fahrzeugbus (10) übertragen werden müssen.

2. Verfahren nach Anspruch 1, **dadurch gekennzeichnet, dass** das Senden der Information über einen am Internet angeschlossenen Computer durchgeführt wird.

3. Verfahren nach einem der vorhergehenden Ansprüche, **dadurch gekennzeichnet, dass** die Kurznachricht die Kommandocodes direkt beinhaltet so dass diese nur noch im Fahrzeug an die entsprechenden Empfänger übertragen werden müssen.

4. Verfahren nach einem der vorhergehenden Ansprüche, **dadurch gekennzeichnet, dass** die Kurznachricht eine SMS eines herkömmlichen Mobilfunknetzes ist.

5. Verfahren nach einem der vorhergehenden Ansprüche, **dadurch gekennzeichnet, dass** die Kurznachricht einen Code umfasst, in dem die Funktion und die Art der Steuerung dieser Funktion im Fahrzeug codiert ist.

6. Verfahren nach einem der vorhergehenden Ansprüche, **dadurch gekennzeichnet, dass** die Verarbeitungseinheit die Anrufemummer überprüft und die Steuerung der Funktion nur bei korrekter Anrufemummer veranlasst.

7. Verfahren nach einem der vorhergehenden Ansprüche, **dadurch gekennzeichnet, dass** in einem Zentralrechner eines Serviceproviders eine Anforderung zum Senden der Information von einer Bedienperson empfangen wird und eine daraus abgeleitete Kurznachricht über das Mobilfunknetz ans Fahrzeug gesendet wird.

8. Verfahren nach dem vorhergehenden Anspruch, **dadurch gekennzeichnet, dass** dem Service Provider die Aufforderung zum Senden der Informationen durch einen herkömmlichen Telefonanruf der Bedienperson mitgeteilt wird.

9. Verfahren nach einem der vorhergehenden Ansprüche, **dadurch gekennzeichnet, dass** die Information und eine Sendeanforderung von einer Bedienperson über das Internet mittels eines Computers oder eines Mobilfunktelefons mit WAP-Fähigkeit ausgewählt wird und die Kurznachricht vom Internetserver aus initiiert über das Mobilfunknetz an das Fahrzeug gesendet wird.

10. Verfahren nach einem der vorhergehenden Ansprüche, **dadurch gekennzeichnet, dass** im Fahrzeug eine Überprüfung der Telefonnummer des Absenders und/oder eine Überprüfung wenigstens eines mit der Nachricht übermittelten Codeworts überprüft wird und/oder die verschlüsselt gesendete Nachricht entschlüsselt wird.

11. Vorrichtung zum Empfang von Informationen in Verbindung mit einem Fahrzeug zum Steuern einer Funktion im Fahrzeug, welche eine Verarbeitungseinheit (6) im Fahrzeug umfasst, die über ein Mobilfunknetz (2) eine Information empfängt, mit deren Hilfe die Funktion gesteuert wird, wobei die Information eine Kurznachricht ist, **dadurch gekennzeichnet, dass** die Verarbeitungseinheit (6) über einen Fahrzeugbus (10) mit Steuereinheiten (7, 8, 9) im Fahrzeug verbunden ist, die Kurznachricht derart aufgebaut ist, dass Kommandocodes enthalten sind und dass die Verarbeitungseinheit derart ausgestaltet ist, dass die Kommandocodes von der Verarbeitungseinheit zur Auslösung der Aktion im Fahrzeug nur noch direkt auf den Fahrzeugbus übertragen werden müssen.

12. Vorrichtung nach Anspruch 11, **dadurch gekennzeichnet, dass** die Verarbeitungseinheit derart ausgelegt ist, dass die angekommene Kurznachricht und/oder die Quelle der Nachricht überprüft wird, und nur bei korrekter Nachricht und/oder berechtigtem Absender die Funktion gesteuert wird.

13. Vorrichtung nach Anspruch 11 oder 12, **dadurch gekennzeichnet, dass** ein Mobilfunkendgerät oder ein PC am Internet vorgesehen ist, über den die Aufforderung zum Senden einer Information eingegeben wird.

14. Computerprogramm mit Programmcode-Mitteln, die dazu ausgelegt sind, um alle Schritte von jedem beliebigen der Ansprüche 1 bis 10 durchzuführen, wenn das Programm auf einem Computer ausgeführt wird.

15. Computerprogrammprodukt mit Programmcodemitteln, die auf einem computerlesbaren Datenträger gespeichert sind, und die dazu ausgelegt sind, um das Verfahren nach jedem beliebigen der Ansprüche 1 bis 10 durchzuführen, wenn das Programmprodukt auf einem Computer ausgeführt wird.

## Claims

1. Method for receiving information in connection with a vehicle for the purpose of controlling a function, where a processing unit (5, 6) in the vehicle uses a mobile radio network (2) to receive a piece of information which is used to control the function in the vehicle, the piece of information being a short message, **characterized in that** the short message is designed to hold command codes which the processing unit (5, 6) now merely needs to transmit directly to the vehicle bus (10), connecting the processing unit (6) to control units (7, 8, 9) in the vehicle in order to trigger the action in the vehicle.

2. Method according to Claim 1, **characterized in that** the piece of information is sent using a computer connected to the internet.

3. Method according to one of the preceding claims, **characterized in that** the short message contains the command codes directly, so that they now only need to be transmitted to the relevant receivers in the vehicle.

4. Method according to one of the preceding claims, **characterized in that** the short message is an SMS in a conventional mobile radio network.

5. Method according to one of the preceding claims, **characterized in that** the short message comprises a code in which the function and the type of control for this function in the vehicle are encoded.

6. Method according to one of the preceding claims, **characterized in that** the processing unit checks the caller number and prompts control of the function only if the caller number is correct.

7. Method according to one of the preceding claims, **characterized in that** a central computer belonging to a service provider receives a request to send the piece of information from an operator, and a short message derived therefrom is sent to the vehicle via the mobile radio network.

8. Method according to the preceding claim, **characterized in that** the service provider is notified of the requirement to send the information by a conventional telephone call from the operator.

9. Method according to one of the preceding claims, **characterized in that** the piece of information and a transmission request from an operator are selected via the internet using a computer or a mobile radio telephone with WAP capability, and the short message is sent to the vehicle by the mobile radio network when initiated from the internet server.

10. Method according to one of the preceding claims, **characterized in that** the vehicle checks the sender's telephone number and/or at least one code word transmitted with the message and/or decrypts the message sent in encrypted form.

11. Apparatus for receiving information in connection with a vehicle for the purpose of controlling a function in the vehicle, which comprises a processing unit (6) in the vehicle which uses a mobile radio network (2) to receive a piece of information which is used to control the function, the piece of information being a short message, **characterized in that** the processing unit (6) is connected to control units (7, 8, 9) in the vehicle via a vehicle bus (10), the short message is designed to hold command codes, and **in that** the processing unit is in the form such that the command codes now merely need to be transmitted from the processing unit directly to the vehicle bus in order to trigger the action in the vehicle.

12. Apparatus according to Claim 11, **characterized in that** the processing unit is designed to check the short message which has arrived and/or the source of the message, and the function is controlled only if the message is correct and/or the sender is authorized.

13. Apparatus according to Claim 11 or 12, **characterized in that** a mobile radio terminal or a PC is provided on the internet and is used to input the request to send a piece of information.

14. Computer program having program code means which are designed to carry out all the steps in any one of Claims 1 to 10 when the program is executed on a computer.

15. Computer program product having program code means which are stored on a computer-readable data storage medium and which are designed to carry out the method according to any one of Claims 1 to 10 when the program product is executed on a computer.

## Revendications

1. Procédé de réception d'informations en liaison avec un véhicule pour commander une fonction, selon lequel,
une unité de traitement (5, 6) du véhicule reçoit une information par un réseau de communication mobile (2), à l'aide de laquelle on commande la fonction dans le véhicule,
l'information étant un message court,
**caractérisé en ce que**
le message court est construit pour contenir des codes d'ordre pour déclencher l'action dans le véhicule et qui n'ont plus qu'à être transmis directement par le bus (10) du véhicule reliant dans le véhicule, l'unité de traitement (6) aux unités de commande (7, 8, 9).

2. Procédé selon la revendication 1,
**caractérisé en ce que**
l'émission des informations se fait par un ordinateur relié au réseau internet.

3. Procédé selon l'une quelconque des revendications précédentes,
**caractérisé en ce que**
le message court contient directement les codes d'ordre de façon à ne plus avoir à transmettre que ceux-ci dans le véhicule vers le destinataire correspondant.

4. Procédé selon l'une quelconque des revendications précédentes,
**caractérisé en ce que**
le message court est un message SMS d'un réseau de communication mobile habituel.

5. Procédé selon l'une quelconque des revendications précédentes,
**caractérisé en ce que**
le message court comprend un code dans lequel sont codés la fonction et le type de commande de cette fonction dans le véhicule.

6. Procédé selon l'une quelconque des revendications précédentes,
**caractérisé en ce que**
l'unité de traitement vérifie le numéro d'appel et ne demande la commande de la fonction que si le numéro d'appel est correct.

7. Procédé selon l'une quelconque des revendications précédentes,
**caractérisé en ce qu'**
un calculateur central d'un fournisseur de service reçoit une requête d'émission de l'information d'un opérateur et envoie un message court qui en est déduit par le réseau de communication mobile vers le véhicule.

8. Procédé selon l'une quelconque des revendications précédentes,
**caractérisé en ce que**
la requête d'émission des informations est transmise au fournisseur de service par un appel téléphonique habituel par l'opérateur.

9. Procédé selon l'une quelconque des revendications précédentes,
**caractérisé en ce que**
l'information et la requête d'émission sont envoyées par un opérateur par l'intermédiaire du réseau Internet à l'aide d'un ordinateur ou d'un téléphone mobile à capacité WAP et le message court est envoyé par le réseau de communication mobile au véhicule à l'initiative du serveur Internet.

10. Procédé selon l'une quelconque des revendications précédentes,
**caractérisé en ce que**
dans le véhicule on vérifie le numéro de téléphone de l'émetteur et/ou on vérifie au moins l'un des mots de code transmis avec le message et/ou on décode le message envoyé de manière codée.

11. Dispositif de réception d'informations en liaison avec un véhicule pour commander une fonction dans le véhicule comprenant une unité de traitement (6) dans le véhicule qui reçoit une information par l'intermédiaire d'un réseau de communication mobile (2) et à l'aide de laquelle on commande la fonction, l'information étant un message court,
**caractérisé en ce que**
l'unité de traitement (6) est reliée par un bus de véhicule (10) aux unités de commande (7, 8, 9) du véhicule, le message court est construit pour contenir des codes d'ordre et l'unité de traitement est conçue pour n'avoir à transmettre les codes d'ordre pour déclencher l'action dans le véhicule que de manière directe par le bus du véhicule.

12. Dispositif selon la revendication 11,
**caractérisé en ce que**
l'unité de traitement est conçue pour vérifier le message court d'entrée et/ou la source de message et en cas de message correct et/ou d'émetteur autorisé, on commande la fonction.

13. Dispositif selon l'une quelconque des revendications 11 ou 12,
**caractérisé en ce qu'**
un terminal de communication mobile ou un PC est prévu sur Internet qui reçoit la requête d'envoi d'une information.

14. Programme d'ordinateur comportant des moyens de code de programme pour effectuer toutes les étapes selon l'une quelconque des revendications 1 à 10, lorsque le programme est exécuté par un ordinateur.

15. Produit programme d'ordinateur comportant des moyens de code programme enregistrés sur un support de données que peut lire un ordinateur et conçus pour exécuter le procédé selon l'une quelconque des revendications 1 à 10 lorsque le produit programme est exécuté par un ordinateur.
